Europäisches Patentamt

European Patent Office

Office européen des brevets

(11) Veröffentlichungsnummer: **0 104 552**
**A1**

(12) # EUROPÄISCHE PATENTANMELDUNG

(21) Anmeldenummer: 83109125.1

(22) Anmeldetag: 15.09.83

(51) Int. Cl.³: **F 16 B 25/00**

(30) Priorität: 24.09.82 DE 3235352

(43) Veröffentlichungstag der Anmeldung:
04.04.84 Patentblatt 84/14

(84) Benannte Vertragsstaaten:
AT BE CH DE FR GB IT LI LU NL SE

(71) Anmelder: Eberhard Jaeger GmbH & Co. KG
Untere Bienhecke
D-5928 Laasphe(DE)

(72) Erfinder: Grossberndt, Hermann
Im Wabach 7
D-5928 Laasphe 1(DE)

(74) Vertreter: Schlee, Richard et al,
Patentanwälte Dipl.-Ing. R. Schlee Dipl.-Ing. A. Missling
Bismarckstrasse 43
D-6300 Giessen 1(DE)

(54) Selbstformende Schraube.

(57) Die Schraube hat ein asymmetrisches Profil, das so orientiert ist, daß die Lastflanke (4) relativ zur Schraubenachse (7) eine Schrägstellung hat, die größer ist als die Schrägstellung der lastfreien Flanke (5). Durch die Asymmetrie erreicht man, daß auch bei relativ kleinem Flankenwinkel ($\alpha$) die Lastflanke stark geneigt ist. Diese starke Neigung hat zur Folge, daß die Reibungskraft an der Lastflanke groß wird, so daß ohne Gefahr des Ausreißens des Muttergewindes ein großes Drehmoment auf die Schraube aufgebracht werden kann.

Die Schraube ist insbesondere zum Eindrehen in Kunststoffe geeignet und hat gegenüber bisher bekannten Schrauben für Kunststoffe den Vorteil, daß die zulässige Toleranz für das Anzugsmoment vergrößert werden kann.

Fig. 2

EP 0 104 552 A1

Patentanwälte
Dipl.-Ing. Richard Schlee
Dipl.-Ing. Arne Missling

6300 Gießen 1
Bismarckstraße 43

0104552


Eberhard Jaeger GmbH & Co. KG,
D-5928 Laasphe


Selbstformende Schraube


## Beschreibung:


Die Erfindung bezieht sich auf eine selbstformende Schraube mit mindestens einer, vorspringende Gewindegänge bildenden, Wendel, die längs eines Schraubenkernes verläuft, wobei eine Seite der Wendel (Lastflanke) in Spannrichtung weist und für die Aufnahme der Haltekraft bei montierter Schraube bestimmt ist, während die andere Seite der Wendel (Lastfreie Flanke) für eine geringere Belastung bestimmt ist.

Selbstformende Schrauben werden in glatte Löcher eingedreht und formen in das Material der Lochwand ein Gewinde. Dies ist möglich, wenn die Schraube aus relativ hartem Material, z.B. aus Stahl, und die Lochwand aus relativ weichem Material, z.B. Kunststoff, besteht. Einen besonders guten Halt in relativ weichen Kunststoffen, insbesondere thermoplastischen Kunststoffen, findet eine Schraube nach der DE-PS 27 54 870, während eine vorteilhafte Schraube für den Halt in relativ hartem Kunststoff, insbesondere duroplastischen Kunststoffen, in der Patentanmeldung P 32 01 846.0 beschrieben ist.

Selbstfurchende Schrauben müssen mit einem erheblichen Eindrehmoment in das Loch eingedreht werden, da beim Eindrehen eine Werkstoffverformung oder Werkstoffzerspanung stattfindet, also Verformungskräfte bzw. Zerspanungskräfte aufzubringen sind. Um einen sicheren Sitz der Schraube zu erzielen, muß nach Beendigung des Eindrehens ein gewisses Anzugsmoment aufgebracht werden, das größer ist als das Eindrehmoment. Das Anzugsmoment darf keinesfalls so groß sein, daß das Muttergewinde ausgerissen wird. Das Drehmoment, bei dem das Ausreißen stattfindet, wird als Überdrehmoment bezeichnet. Das Anzugsmoment muß auf jeden Fall einen sicheren Abstand sowohl vom Eindrehmoment als auch vom Überdrehmoment haben. Der Abstand vom Eindrehmoment ist deshalb nötig, daß das Eindrehen sicher vonstatten geht, d.h. das vom Schraubendreher erzeugte Moment muß in jedem Fall größer sein als das Eindrehmoment, da der Schraubendreher andernfalls zum Stillstand käme. Das Anzugsmoment ist, wenn man die Massenkräfte beim plötzlichen Abstoppen des Schraubendrehers außer acht läßt (diese Massenkräfte bewirken eine weitere Momentvergrößerung), also mindestens gleich dem vom Schraubendreher erzeugbaren Moment. Das Anzugsmoment muß deshalb kleiner als das Überdrehmoment sein, weil andernfalls das Muttergewinde zerstört würde.

Für das Einformen eines Muttergewindes in ein glattwandiges Loch eignen sich besonders gut Schrauben mit dünnen Gewindegängen, also kleinem Flankenwinkel, da relativ wenig Material verdrängt oder abgeschabt werden muß und dennoch eine relativ große Eindringtiefe in das weiche Material, z.B. Kunststoff, erzielt wird. Bei symmetrischer Ausbildung des Gewindeprofiles und dünnen Gewindegängen haben die Gewindeflanken eine nur geringe Neigung, d.h. im Profil betrachtet weichen die Gewindeflanken nur wenig von einer Normalen auf die Schraubenachse ab; bei einem Flankenwinkel von 30° ist diese Abweichung z.B. 15°.

Der Erfindung liegt die Aufgabe zugrunde, eine Schraube der eingangs genannten Art so auszubilden, daß im Vergleich mit bekannten Schrauben, die gleiche Flankenwinkel haben, bei einem gegebenen Anzugsmoment die axiale Belastung der Gewindegänge

- 3 -

0104552

herabgesetzt wird.

Diese Aufgabe wird nach der Erfindung dadurch gelöst, daß die Lastflanke mit der Schraubenachse einen ersten stumpfen Winkel einschließt, während die lastfreie Flanke mit der Schraubenachse einen zweiten stumpfen Winkel, der kleiner ist als der erste stumpfe Winkel oder einen rechten Winkel oder einen spitzen Winkel einschließt.

Der Erfindung liegt die Erkenntnis zugrunde, daß die Reibungskräfte, die dem Eindrehen der Schraube entgegenwirken, größer werden, wenn die Flanke stärker geneigt wird. Durch die beschriebene asymmetrische Ausbildung des Gewindeprofiles wird bei einem gegebenen Flankenwinkel eine stärkere Neigung der Lastflanke erreicht. Damit vergrößert sich der Reibungswiderstand, der dem Eindrehen der Schraube entgegenwirkt. Für eine gegebene Axialkraft der Schraube, die ja für das Ausreißen des Muttergewindes maßgebend ist, kann also ein größeres Moment aufgebracht werden. Das Überdrehmoment liegt also höher als bei Schrauben mit geringerer Neigung der Lastflanke.

Der Flankenwinkel ist vorzugsweise kleiner als 45°, vorzugsweise ca. 30° (Anspruch 2). Ein kleiner Flankenwinkel erleichtert das Eindringen des Gewindes in den Werkstoff der Lochwand. Die Erfindung ist insbesondere von Bedeutung in Verbindung mit kleinen Flankenwinkeln, da ja bei kleinen Flankenwinkeln und symmetrischer Ausbildung des Gewindes die Neigung der Flanken gering ist und durch die erfindungsgemäße asymmetrische Ausbildung wesentlich vergrößert werden kann.

Die Vergrößerung des Überdrehmomentes wird durch die asymmetrische Ausbildung im Sinne der Erfindung tendenziell bei jeder Abweichung von der Symmetrie verbessert. Für die Praxis ausreichend große Reibungen erhält man bei Größen des genannten ersten stumpfen Winkels, wie sie im Anspruch 3 angegeben sind. Um bei einem gegebenen Flankenwinkel einen möglichst großen ersten stumpfen Winkel zu erhalten, muß der zweite stumpfe Winkel möglichst klein sein, oder es muß ein rechter Winkel oder gar ein spitzer Winkel gewählt werden. Ein rechter Winkel oder ein spitzer Winkel sind allerdings nur möglich, wenn die Schraube durch Zerspanung von Material hergestellt wird. Wenn, wie dies im Zusammenhang mit der Erfindung vorzuziehen ist, die Schraube durch Kaltwalzen hergestellt wird (Anspruch 12), ist ein stumpfer Winkel an der lastfreien Flanke erforderlich, wobei dieser Winkel möglichst nahe bei einem rechten Winkel liegen soll. Möglich ist ein Winkel von 93° (Anspruch 4).

Vorzugsweise ist das Gewinde auch im übrigen ähnlich ausgebildet wie in der bereits genannten DE-PS 27 54 870 und der deutschen Patentanmeldung P 32 01 846.0. Vorzugsweise sind also zwischen den Gewindegängen Einschnürungen gemäß den Ansprüchen 5 bis 7 vorhanden.

Für Schrauben, die in Kunststoff eingedreht werden sollen, ist eine Profilgestaltung gemäß den Ansprüchen 8 und 9 vorteilhaft. Je nachdem, mit welchen Durchmessern solche Profile kombiniert werden, erhält man im Verhältnis zum Durchmesser der Schraube kleinere oder größere Höhen des Gewindeprofiles. Die im Anspruch 10 genannten Verhältnisse, die auch in der DE-PS 27 54 870 genannt sind, eignen sich insbesondere für relativ weiche Kunststoffe, insbesondere thermoplastische Kunststoffe. Die im Anspruch 11 angegebenen Verhältnisse hingegen sind besser für harte Kunststoffe, insbesondere duroplastische Kunststoffe, geeignet.

Gut geeignete Werkstoffe für die Herstellung der Schraube sind in den Ansprüchen 13 bis 15 angegeben.

In der Zeichnung ist ein Ausführungsbeispiel der Erfindung dargestellt. Es zeigen:

Fig. 1 eine Schraube mit Sechskantkopf in Ansicht und

Fig. 2 das Gewindeprofil der Schraube nach Fig. 1.

Dargestellt ist eine eingängige Schraube mit im Verhältnis zum Schraubendurchmesser hohen Gewindegängen. Die das Gewinde bildende Wendel ist insgesamt mit 1 bezeichnet und erstreckt sich über annähernd die gesamte Länge eines Schraubenschaftes 2, der in der Nähe eines Sechskantkopfes 3 einen kurzen gewindelosen Abschnitt 2a aufweist.

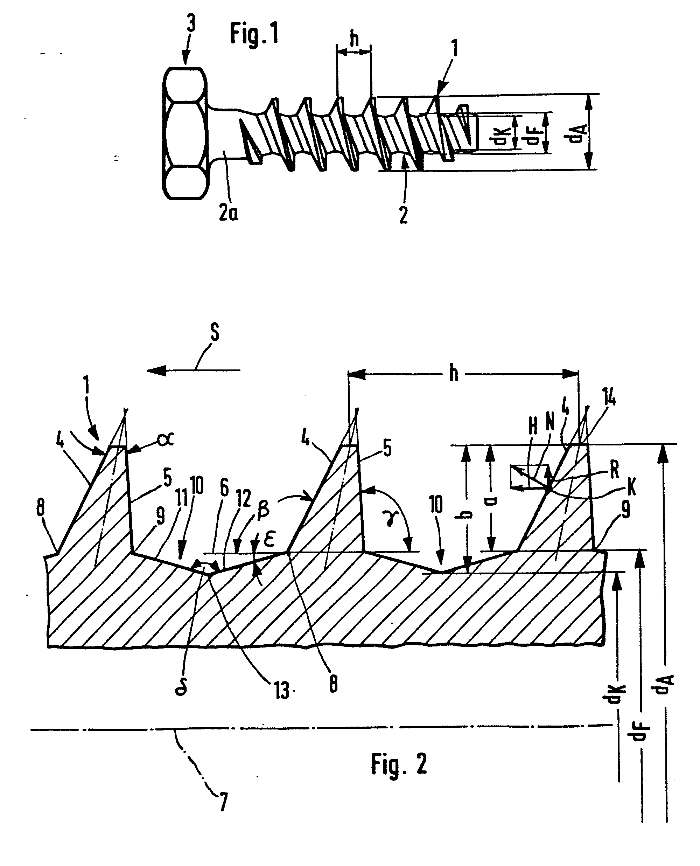

Die Schraube hat einen Kerndurchmesser $d_K$, einen Fußdurchmesser $d_F$ und einen Außendurchmesser $d_A$. Die Gewindesteigung ist mit h bezeichnet. Die Ausbildung des Gewindeprofiles im übrigen soll nachfolgend anhand der Fig. 2 betrachtet werden.

Fig. 2 zeigt besonders deutlich, daß das Gewindeprofil asymmetrisch ist. Die in der Zeichnung links befindliche Seite der Wendel 1 wird im folgenden als Lastflanke 4 bezeichnet und die rechts liegende Flanke als lastfreie Flanke 5. Die Lastflanke 4 weist in Spannrichtung, die durch den Pfeil S symbolisiert ist und die im allgemeinen in Richtung eines Schraubenkopfes weist. Andere Anordnungen sind ebenfalls möglich. Bei angezogener Schraube wird die Lastflanke 4 der Wendel gegen den Werkstoff des Muttergewindes gepreßt. Der Winkel $\alpha$ (Flankenwinkel) zwischen den Flanken 4 und 5 ist bei dem gezeichneten Beispiel 30°. Die Lastflanke schließt mit der Schraubenachse den stumpfen Winkel $\beta$ ein. Dieser Winkel beträgt bei dem gezeichneten Beispiel 117°. Die lastfreie Flanke 5 schließt mit der Schraubenachse ebenfalls einen stumpfen Winkel ein, der beim gezeichneten Beispiel nur wenig von einem rechten Winkel abweicht und 93° beträgt. Zur Klarstellung sei bemerkt, daß die Linie 6, an die die Winkel $\beta$ und $\gamma$ angetragen sind, parallel zu der strichpunktiert eingezeichneten Schraubenachse 7 verläuft. Das Gewindeprofil hat Fußpunkte 8, 9, von denen die Flanken 4, 5 ausgehen. Zwischen benachbarten Gewindegängen befindet sich eine Einschnürung 10, die im Profil gesehen von geraden Linien 11, 12 begrenzt ist. Diese Linien gehen von den Fußpunkten 8, 9 aus und treffen sich an einem Schnittpunkt 13, der in der Mitte zwischen den Fußpunkten 8, 9 liegt. Der Winkel $\delta$ zwischen den Linien 11, 12 ist beim gezeichneten Ausführungsbeispiel 150°, woraus sich ergibt, daß der Winkel $\varepsilon$ 15° beträgt.

Die Steigung des Gewindes ist mit h bezeichnet. Das Gewindeprofil für sich läßt sich ohne Zusammenhang mit den Durchmessern $d_K$, $d_F$, $d_A$ beschreiben. Zum Zwecke dieser Beschreibung des Gewindeprofiles müssen noch die Maße a, b eingeführt werden. Das Maß a ist die Höhe des Profiles, gemessen von den Fußpunkten 8, 9 bis zum Außenumfang 14. Das Maß b ist der Abstand von der tiefsten Stelle der Einschnürung 10 bis zur Umfangsfläche 14. Mit den Maßen h, a, b und den diversen beschriebenen Winkeln ist das Gewindeprofil vollständig beschrieben.

Je nachdem, mit welchem Schraubendurchmesser ein so definiertes Gewinde kombiniert wird, erhält man relativ hohe oder relativ niedrige Gewindegänge. Wenn die Schraube für die Verwendung zusammen mit relativ weichen Materialien verwendet werden soll, wird man hohe Gewindegänge verwenden. Wenn die Schrauben für relativ harte Werkstoffe bestimmt sind, z.B. duroplastische Kunststoffe, wird man die Gewindegänge relativ niedrig wählen. In diesem letzteren Falle können auch mehrgängige, z.B. zweigängige Gewinde von Vorteil sein, damit die Gewindesteigung nicht zu gering wird. Im Falle eines zweigängigen Gewindes ist der Abstand h nur die halbe Steigung, während im Falle des dargestellten eingängigen Gewindes h mit der Gewindesteigung übereinstimmt.

Wenn die Schraube montiert ist, wirken die Haltekräfte H parallel zur Schraubenachse 7. Ein Element der Haltekraft H ist in Fig.2 eingezeichnet. Die Haltekraft H läßt sich zerlegen in eine radiale Kraft R und eine Normalkraft N, die rechtwinklig zur Lastflanke 4 verläuft. Die Normalkraft N bestimmt den Reibungswiderstand, der dem Eindrehen der Schraube entgegenwirkt. Die Reibungskraft wirkt längs der Lastflanke 4 und ist durch den Punkt K angedeutet. Die Reibungskraft K ist also umso größer, je größer die Normalkraft N ist. Die Reibungskraft ist gleich dem Reibungskoeffizienten multipliziert mit der Normalkraft N. N wird nun umso größer, je größer der erste stumpfe Winkel $\beta$ wird. Dies bedeutet, daß bei einer zulässigen Haltekraft H eine große Reibungskraft K erzielt wird, wenn man den Winkel $\beta$ möglichst groß wählt. Das Anzugsmoment kann also groß werden, bevor die höchstzulässige Haltekraft überschritten wird. Bei zu starker Überschreitung der höchstzulässigen Haltekraft H reißt das Gewinde aus dem weichen Werkstoff aus. Dieses Ausreißen findet bei dem sogenannten Überdrehmoment statt. Dieses Überdrehmoment wird bei im übrigen gegebenen Verhältnissen umso größer, je größer der erste stumpfe Winkel $\beta$ ist. Durch die asymmetrische Ausbildung des Gewindeprofiles derart, daß die Lastflanke 4 stärker geneigt ist als die lastfreie Flanke 5, kann man auch bei einem dünnen Profil (kleiner Flankenwinkel) erreichen, daß das Überdrehmoment groß wird. Die Asymmetrie ist entgegengesetzt zu der an sich bekannten Asymmetrie, bei der zur Erzielung von einer Art Widerhakeneffekt die Lastflanke weniger geneigt ist als die lastfreie Flanke, d.h. die Asymmetrie geht bei den bekannten Schrauben mit asymmetrischem Gewindeprofil in entgegengesetzter Richtung.

Im allgemeinen wird man die Schraube durch Kaltwalzen, also durch spanlose Formgebung, herstellen. In diesem Fall muß der Winkel $\gamma$

- 8 -

0104552

ein wenig größer als 90° sein. $\gamma$ kann jedoch auch 90° erreichen oder kleiner als 90° sein, wenn das Gewinde durch Zerspanung von Material hergestellt wird.

Ansprüche:

1. Selbstformende Schraube mit mindestens einer, vorspringende Gewindegänge bildenden Wendel, die längs eines Schraubenkernes verläuft, wobei eine Seite der Wendel (Lastflanke) in Spannrichtung weist und für die Aufnahme der Haltekraft bei montierter Schraube bestimmt ist, während die andere Seite der Wendel (lastfreie Flanke) für eine geringere Belastung bestimmt ist, dadurch gekennzeichnet, daß die Lastflanke (4) mit der Schraubenachse (7) einen ersten stumpfen Winkel ($\beta$) einschließt, während die lastfreie Flanke (5) mit der Schraubenachse (7) einen zweiten stumpfen Winkel ($\gamma$), der kleiner ist als der erste stumpfe Winkel ($\beta$) oder einen rechten Winkel oder einen spitzen Winkel einschließt.

2. Selbstformende Schraube nach Anspruch 1, dadurch gekennzeichnet, daß der Winkel ($\beta$) zwischen der Lastflanke (4) und der lastfreien Flanke (5) kleiner als 45° ist, vorzugsweise ca. 30° beträgt.

3.  Selbstformende Schraube nach einem der vorhergehenden Ansprüche, dadurch gekennzeichnet, daß der erste stumpfe Winkel
( $\beta$ ) im Bereich von 110° bis 130° liegt, vorzugsweise ca.
120° beträgt.

4.  Selbstformende Schraube nach einem der vorhergehenden Ansprüche, dadurch gekennzeichnet, daß der zweite stumpfe Winkel ( $\gamma$ ) im Bereich von 90° bis 100° liegt, vorzugsweise
ca. 93° beträgt.

5.  Selbstformende Schraube nach einem der vorhergehenden
Ansprüche, dadurch gekennzeichnet, daß zwischen benachbarten
Gewindegängen Einschnürungen (10) vorhanden sind, deren
engste Stelle (13) (Kerndurchmesser $d_K$) etwa in der Mitte
zwischen den Gewindegängen liegt, wobei sich der Kern, ausgehend von den Fußenden (8, 9) benachbarter Gewindegänge
verjüngt.

6. Selbstformende Schraube nach Anspruch 5, dadurch gekennzeichnet, daß am Gewindeprofil gesehen der Übergang vom
Kerndurchmesser ($d_K$) bis zu den Fußpunkten (8, 9) der vorspringenden Gewindegänge (1) im wesentlichen geradlinig
ist.

7.  Selbstformende Schraube nach Anspruch 6, dadurch gekennzeichnet, daß am Gewindeprofil gesehen die geraden Linien
(11, 12) einen Winkel ( $\delta$ ) im Bereich von 160° bis 140°,
vorzugsweise von ca. 150°, einschließen.

8.  Selbstformende Schraube nach einem der vorhergehenden
Ansprüche, dadurch gekennzeichnet, daß das Verhältnis (h/b) zwischen dem axialen Abstand (h) benachbarter Gewindegänge und der Gesamthöhe (b) der Gewindegänge, gemessen vom Kernradius ($d_K$/2) bis zum Außenradius ($d_A$/2) im Bereich von 2,3 bis 1,5 liegt, vorzugsweise ca. 2,0 beträgt.

9. Selbstformende Schraube nach einem der vorhergehenden Ansprüche, dadurch gekennzeichnet, daß das Verhältnis (h/a) zwischen dem axialen Abstand (h) benachbarter Gewindegänge und der Fußhöhe (a) der Gewindegänge, gemessen vom Fußpunktradius ($d_F$/2) bis zum Außenradius ($d_A$/2) im Bereich von 2,9 bis 1,9 liegt, vorzugsweise ca. 2,5 beträgt.

10. Selbstformende Schraube nach einem der vorhergehenden Ansprüche, dadurch gekennzeichnet, daß das Verhältnis ($d_A$/$d_K$) zwischen Außendurchmesser ($d_A$) und Kerndurchmesser ($d_K$) größer ist als 1,5, vorzugsweise 1,85 beträgt, wobei das Gewinde vorzugsweise eingängig ist.

11. Selbstformende Schraube nach einem der Ansprüche 1 bis 9, dadurch gekenzeichnet, daß das Verhältnis ($d_A$/$d_K$) zwischen Außendurchmesser ($d_A$) und Kerndurchmesser ($d_K$) kleiner als 1,5 und größer als 1,2 ist, vorzugsweise ca. 1,3 beträgt, wobei das Gewinde vorzugsweise zweigängig ist.

12. Selbstformende Schraube nach einem der vorhergehenden Ansprüche, dadurch gekennzeichnet, daß sie durch Kaltwalzen spanlos geformt ist, wobei der zweite stumpfe Winkel ($\gamma$) vorzugsweise 93° oder mehr beträgt.

13. Selbstformende Schraube nach einem der vorhergehenden Ansprüche, dadurch gekennzeichnet, daß die Schraube aus Stahl mit einem Kohlenstoffgehalt bis 0,35 % besteht.

14. Selbstformende Schraube nach einem der Ansprüche 1 bis 12, dadurch gekennzeichnet, daß die Schraube aus einem austenitischen Chrom-Nickel-Stahl, z.B. V2A-Stahl, besteht.

15. Selbstformende Schraube nach einem der Ansprüche 1 bis 12, dadurch gekennzeichnet, daß die Schraube aus einem ferritischen Chromstahl besteht.

Fig.1

Fig. 2

# EUROPÄISCHER RECHERCHENBERICHT

Europäisches
Patentamt

## EINSCHLÄGIGE DOKUMENTE

EP 83109125.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| P,D, A | DE - A1 - 3 201 846 (EBERHARD JAEGER GMBH & CO KG) <br><br> * Fig.; Patentansprüche 1-3, 5,7,11; Seite 9, Zeilen 8,9 * <br><br> -- | 1,2,5-7,11, 12 | F 16 B 25/00 |
| P,A | DE - A1 - 3 114 138 (RICHARD BERGNER) <br><br> * Fig.; Patentansprüche 1,2 * <br><br> -- | 1-4 | |
| D,A | DE - A1 - 2 754 870 (EBERHARD JAEGER GMBH & CO KG) <br><br> * Fig.; Patentansprüche 1-6, 10-12 * <br><br> -- | 1-6,10, 13-15 | |
| A | DE - B2 - 2 256 938 (UPAT GMBH & CO) <br><br> * Fig.; Patentanspruch 1 * <br><br> ---- | 1,5 | |

RECHERCHIERTE
SACHGEBIETE (Int. Cl. 3)

F 16 B

Der vorliegende Recherchenbericht wurde für alle Patentansprüche erstellt.

| Recherchenort | Abschlußdatum der Recherche | Prüfer |
|---|---|---|
| WIEN | 29-11-1983 | REIF |